# EUROPEAN PATENT APPLICATION

(11) **EP 4 546 502 A1**
(43) Date of publication of application: **30.04.2025**
(21) Application number: 24209002.5
(22) Date of filing: 25.10.2024
(51) Int. Cl.: H01M 10/42, H01M 10/48, A62C 3/00, H01M 50/35

(54) **A SYSTEM AND METHOD FOR DETECTING A THERMAL RUNAWAY EVENT IN A BATTERY PACK**

(30) Priority: 27.10.2023 US 202363593601 P
(71) Applicant: Carrier Corporation, Palm Beach Gardens, FL 33418 (US)
(72) Inventor: RANJAN, Rajiv, Bradenton, 34202 (US); ALEXANDER, Jennifer, Minneapolis, 55438 (US)
(74) Representative: Dehns

(57) **Abstract**

A sensing system 200 comprising a sensor 211 positioned inside an enclosure 201 of a battery pack 107, a fan 207 positioned in a vicinity of the sensor 211, a plurality of tubes 209 each connected between the fan 207 and the battery pack 107, and a control unit 203 connected to the fan 207 and the sensor 211. The control unit 203 is configured to control the fan 207 to pull, through the plurality of tubes 209, gases and/or particulates generated in the battery pack 107, and control the fan 207 to throw the pulled gases and/or particulates onto the sensor 211. The sensor 211 is configured to detect a change in one or more physical stimuli associated with the battery pack 107 based on the pulled gases and/or particulates. Thereafter, the control unit 203 is configured to detect an occurrence of a thermal runaway event in the battery pack 107 based on the detected change in the one or more physical stimuli.

## Description

### TECHNICAL FIELD

The present invention relates to the field of battery management systems, and more particularly relates to a gas sensing system and method for detecting a thermal runaway event in a battery pack of a vehicle.

### BACKGROUND

In recent years, large battery packs such as Lithium-Ion Battery (LIB) packs are becoming crucial to operations of Electric Vehicle(s) (EVs) (for example, truck trailers, tractor trailers, transport vehicles, and other commercial vehicles) because the large battery packs have high energy density, long life cycles, and low self-discharge rates. For example, the LIB packs provide a power source that drives an electric motor of the electric vehicle, ultimately propelling the electric vehicle.

In order to efficiently manage the large battery packs and ensure optimal performance and longevity, Battery Management System(s) (BMS) were developed. The BMSs safeguard LIBs against potential damage or hazards due to overcharge, undercharge, over-temperature, short circuit, thermal runaways and more. For example, the BMS shuts down the LIBs in case of a thermal runaway event.

However, prevalent issues related to the BMSs are thermal runaway of the large battery packs. The thermal runaway of the large battery packs, if unresolved, can potentially lead to fires or explosions. A major issue related to the BMSs is that the BMSs are not always turned on during the thermal runaway event and fail to shut down the LIBs in such a case. Thus, the BMSs may fail to detect a hazardous situation that can occur due to the thermal runaway event. In such hazardous situations, an early warning related to the LIB's fire is necessary to be provided to an operator or a driver of the EVs.

Therefore, it would be advantageous to provide a technical solution that can overcome the issues related to the BMSs and can provide the early warning related to the LIBs' fire to the operators or the drivers of the EVs.

### SUMMARY

This summary is provided to introduce a selection of concepts in a simplified format that are further described in the detailed description of the invention. This summary is not intended to identify key or essential inventive concepts of the invention, nor is it intended for determining the scope of the invention.

According to a first aspect of the invention there is provided a sensing system, comprising: at least one sensor positioned inside an enclosure of a battery pack, a fan positioned in a vicinity of the at least one sensor, a plurality of tubes, wherein each tube of the plurality of tubes has a plurality of aspirating points, and is connected between the fan and the battery pack; and a control unit connected to the fan and the at least one sensor, wherein the control unit is configured to: control the fan to pull, through the plurality of tubes, gases and/or particulates generated in the battery pack; control the fan to throw the pulled gases and/or particulates onto the at least one sensor, wherein the at least one sensor is configured to detect a change in one or more physical stimuli associated with the battery pack based on the pulled gases and/or particulates; and detect an occurrence of a thermal runaway event in the battery pack based on the detected change in the one or more physical stimuli.

Optionally, to detect the occurrence of the thermal runaway event in the battery pack, the control unit is configured to: determine whether the detected concentration of the gases exceeds a predefined threshold concentration level. Further, the control unit may be configured to: detect the occurrence of the thermal runaway event based on a determination that the detected concentration of the gases exceeds the predefined threshold concentration level.

Optionally, the one or more physical stimuli corresponds to one or more of a gas concentration, a particulate concentration, a temperature, a pressure, and a humidity of the pulled gases and/or the particulates. Further, to detect the occurrence of the thermal runaway event in the battery pack, the control unit may be configured to determine whether the particulates generated in the battery pack exceeds a predefined threshold concentration level; and to detect the occurrence of the thermal runaway event based on a determination that the particulates generated in the battery pack exceeds the predefined threshold concentration level.

Optionally, each tube of the plurality of tubes is one of a flexible tube or a rigid tube.

Optionally, the battery pack includes a plurality of unit battery cells and a corresponding tube of the plurality of tubes is connected between the fan and a corresponding unit battery cell among the plurality of unit battery cells.

Optionally, the corresponding tube of the plurality of tubes has the plurality of aspirating points at each of a first end and a second end of the corresponding tube or along a length of the corresponding tube.

Optionally, the sensing system comprises an annunciator, wherein the control unit is configured to control the annunciator to generate an alarm upon the detection of the occurrence of the thermal runaway event in the battery pack.

According to a second aspect of the invention there is provided a method for detecting a thermal runaway event in a battery pack, the method comprising: by a sensing system that includes at least one sensor positioned inside an enclosure of the battery pack, a fan positioned in a vicinity of the at least one sensor, a plurality of tubes each having a plurality of aspirating points and connected between the fan and the battery pack, and a control unit connected to the fan and the at least one sensor: controlling, by the control unit, the fan to pull, through the plurality of tubes, gases and/or particulates generated in the battery pack; controlling, by the control unit, the fan to throw the pulled gases and/or particulates onto the at least one sensor; detecting, by the at least one sensor, a change in one or more physical stimuli associated with the battery pack based on the pulled gases and/or particulates; detecting, by the control unit, an occurrence of the thermal runaway event in the battery pack based on the detected change in the one or more physical stimuli.

Optionally, for detecting the occurrence of the thermal runaway event in the battery pack, the method includes determining, by the control unit, whether the detected concentration of the gases exceeds a predefined threshold concentration level. The method may include detecting, by the control unit, the occurrence of the thermal runaway event based on a determination that the detected concentration of the gases exceeds the predefined threshold concentration level.

Optionally, the one or more physical stimuli corresponds to one or more of a gas concentration, a particulate concentration, a temperature, a pressure, and a humidity of the pulled gases and/or the particulates. For detecting the occurrence of the thermal runaway event in the battery pack, the method may include determining, by the control unit, whether the particulates generated in the battery pack exceeds a predefined threshold concentration level. The method may include detecting, by the control unit, the occurrence of the thermal runaway event based on a determination that the particulates generated in the battery pack exceeds the predefined threshold concentration level.

Optionally, the sensing system includes an annunciator, and the method may include controlling, by the control unit, the annunciator to generate an alarm upon the detection of the occurrence of the thermal runaway event in the battery pack.

To further clarify the advantages and features of the method and apparatus, a more particular description of the method and apparatus will be rendered by reference to specific embodiments thereof, which is illustrated in the appended drawing. It is appreciated that these drawings depict only specific embodiments of the invention and are therefore not to be considered limiting its scope. The invention will be described and explained with additional specificity and detail with the accompanying drawings.

### BRIEF DESCRIPTION OF THE DRAWINGS

Certain exemplary embodiments will now be described in greater detail by way of example only and with reference to the accompanying drawings in which::
**FIG. 1** illustrates an example diagram of a tractor trailer system including a battery pack;
**FIG. 2** illustrates a perspective view of a sensing system for detecting a thermal runaway event in a battery pack;
**FIG. 3** illustrates an example schematic diagram of corresponding tubes of FIG. 2; and
**FIG. 4** illustrates a flowchart of a method performed by the sensing system for detecting the thermal runaway event in the battery pack.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the invention. Furthermore, in terms of the construction of the apparatus, one or more components of the apparatus may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION

It should be understood at the outset that although illustrative implementations of embodiments are illustrated below, method and apparatus may be implemented using any number of techniques.

The terms "some" and "one or more" as used herein are defined as "one, or more than one, or all." Accordingly, the terms "one," "more than one," but not all" or "all" would all fall under the definition of "some." The term "some embodiments" may refer to no embodiments or one embodiment or several embodiments or all embodiments. Accordingly, the term "some embodiments" and "one or more embodiments" is defined as meaning "one embodiment, or more than one embodiment, or all embodiments".

More specifically, any terms used herein such as but not limited to "includes," "comprises," "has," "have", and grammatical variants thereof do not specify an exact limitation or restriction and certainly do not exclude the possible addition of one or more features or elements, unless otherwise stated, and must not be taken to exclude the possible removal of one or more of the listed features and elements, unless otherwise stated with the limiting language "must comprise" or "needs to include."

The term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Unless otherwise defined, all terms, and especially any technical and/or scientific terms, used herein may be taken to have the same meaning as commonly understood by one having ordinary skill in the art.

Embodiments of the invention will be described below in detail with reference to the accompanying drawings.

The term "tractor trailer system" may be used interchangeably with "vehicle system", the term "tractor" may be used interchangeably with "vehicle", and the term "battery pack" may be used interchangeably with "Lithium-Ion Battery (LIB) packs" or "a power battery pack" in one or more embodiments.

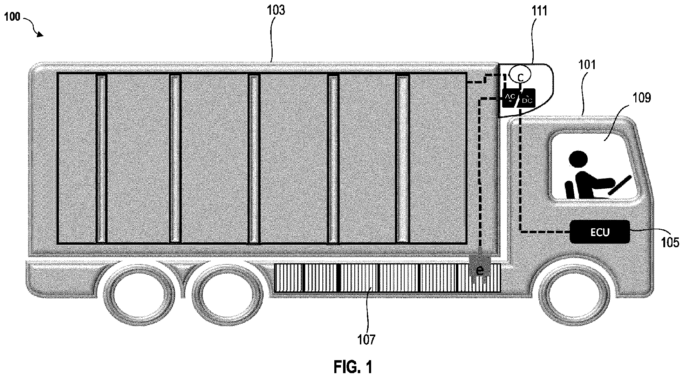

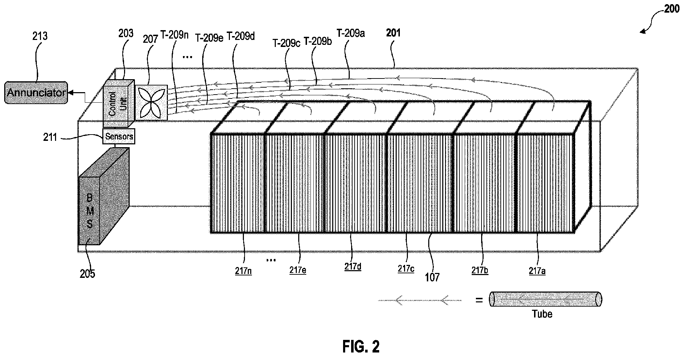

FIG. 1 illustrates an example diagram of a tractor trailer system 100 including a battery pack 107. The tractor trailer system 100 includes a tractor 101 and a trailer 103. The trailer 103 may be coupled to the tractor 101 and is thus pulled or propelled to desired destinations by the tractor 101. The trailer 103 is generally constructed to store cargo (not shown) in FIG. 1. The tractor 101 includes an Electronic Control Unit (ECU) 105, the battery pack 107, a driver cabin 109 for a driver of the tractor 101, and a Direct Current (DC) architecture 111. The tractor 101 further includes a battery box housing 201 that houses the battery pack 107 (as shown in FIG. 2), and a combustion engine (not shown in FIG. 1), which is part of a powertrain or a drive system of the tractor 101.

The ECU 105 may comprise a transceiver and an antenna communicatively coupled with one or more components of the tractor trailer system 100. In particular, the one or more components of the tractor trailer system 100 may be connected with each other via an in-vehicle network, such as a controller area network (CAN) bus. The ECU 105 may be configured to communicate with a cloud server and/or one or more other vehicles via a wireless communication network. The ECU 105 may comprise suitable logic, circuitry, interfaces, and/or code that may be configured to process vehicle data for driver assistance. In accordance with an embodiment, the ECU 105 may be configured to receive vehicle data from one or more connected vehicles in a vehicle-to-vehicle (V2V) communication, via a wireless communication system. The ECU 105 may also comprise one or more circuits such as a microprocessor or controller which may be configured to perform one or more operations associated with a Battery Management System (BMS).

The battery pack 107 is an energy source that is secured to the underside of a bottom wall of the trailer 103 (as shown in FIG. 1). Examples of the battery pack 107 may include a bank of batteries, fuel cells, and others capable of storing and outputting electric energy that may be DC energy. The battery pack 107 is configured to provide power to the tractor 101 during a driving period. The battery pack 107 is configurable to be charged when connected to a power source. The battery pack 107 is configured to be charged using an Alternate Current (AC) source, for example, a remote power station or a receptacle that receives power from a public utility grid. Further, the battery pack 107 includes a plurality of unit battery cells (217a, 217b, 217c, 217d, 217e, ..., and 217n) as shown later in FIG. 2.

The DC architecture 111 is configured to provide power supply from the battery pack 107 to one or more components of the tractor 101 where none of the components of the tractor 101 requires the AC or a mechanical form of power.

FIG. 2 illustrates a perspective view of a sensing system 200 for detecting a thermal runaway event in the battery pack 107. The sensing system 200 includes a control unit 203, a fan 207, a plurality of tubes (T-209a, T-209b, T-209c, T-209d, T-209e, ..., and T-209n) i.e., collectively referred to as tubes 209, sensors 211, and an annunciator 213. The sensing system 200 is coupled to a battery pack housing 201 (also referred to as "a battery enclosure 201") that includes a BMS 205. Each of the control unit 203, the fan 207, the plurality of tubes (T-209a, T-209b, T-209c, T-209d, T-209e, ..., and T-209n), and the sensors 211 are installed adjacent to the battery pack 107 within the battery pack housing 201.

The annunciator 213 is connected to the control unit 203. The control unit 203 is connected to the fan 207 and the sensors 211. Each tube of the plurality of tubes (T-209a, T-209b, T-209c, T-209d, T-209e, ..., and T-209n) is one of a small flexible tube or a small rigid tube. In an example embodiment, a corresponding tube among the plurality of tubes (T-209a, T-209b, T-209c, T-209d, T-209e, ..., and T-209n) is connected between the fan 207 and a corresponding unit battery cell among the plurality of unit battery cells (217a, 217b, 217c, 217dc, 217e, ..., and 217n). An arrangement and connection of the corresponding tubes between the fan 207 and the corresponding unit battery cell among the plurality of unit battery cells (217a, 217b, 217c, 217dc, 217e, ..., and 217n) forms a miniaturized aspirating system that reaches each of the unit battery cells (217a, 217b, 217c, 217dc, 217e, ..., and 217n) and connects back to the sensors 211 in the front of the battery pack 107.

The control unit 203 may perform one or more operations or method steps, as discussed herein. The control unit 203 may include any processing hardware, software, or combination of hardware and software and may perform control, logical, and/or input/output operations. Examples of the control unit 203 may include, but not limited to, an arithmetic logic unit or a processor which performs arithmetic and logical operations, control operations and executes input/output instructions. The control unit 203 is configured to control various components of the sensing system 200. Furthermore, the control unit 203 may essentially be a completely self-contained computing system, containing multiple cores or processors, a bus, a memory controller, a cache, etc. (such as a system-on-chip). The control unit 203 is configured to digitally communicate with the BMS 205, or other such supervisory control systems installed within the battery pack housing 201 or the tractor trailer system 100.

The BMS 205 calculates a charge in each of the unit battery cells (217a, 217b, 217c, 217dc, 217e, ..., and 217n) of the battery pack 107 and keeps track of the individual cell voltages, such that the BMS 205 may signal to a controller of the ECU 105 whether charging or discharging of the battery pack 107 needs to temporarily stop in order to avoid an imbalance of charging states between the battery cells. The BMS 205 may also typically send data corresponding to a battery terminal voltage, an estimated charge, a remaining battery level, and/or possibly other battery data to the controller of the ECU 105. In particular, the BMS 205 safeguards the battery pack 107 against potential damage or hazards due to overcharge, undercharge, over-temperature, short circuit, and more by disconnecting all active connections of the battery pack 107 in case of a thermal runaway event in the battery pack 107.

The fan 207 is positioned in vicinity of the sensors 211. In a non-limiting example, the sensors 211 may include at least one gas sensor, a particulate sensor, a temperature sensor, a humidity sensor, a pressure sensor, etc. Also, as can be seen from FIG. 2, the sensors 211 are positioned on a front surface that is adjacent to the battery pack 107 inside the battery pack housing 201 (may also be referred to as "enclosure of the battery pack 107"). The control unit 203 is configured to control the fan 207 to pull gases generated in the battery pack 107 through the plurality of tubes (T-209a, T-209b, T-209c, T-209d, T-209e, ..., T-209n). Also, the control unit 203 is configured to control the fan 207 to throw the pulled gases onto the sensors 211.

The sensors 211 may be configured to detect a change in one or more physical stimuli associated with the battery pack 107. In a non-limiting example, the one or more physical stimuli may correspond to one or more of a gas concentration, a particulate concentration, a temperature, a pressure, and a humidity level associated with gases and/or particulates that are generated in the battery pack 107. Further, the control unit 203 is configured to detect an occurrence of the thermal runaway event in the battery pack 107 based on the change in the one or more physical stimuli detected by the sensors 211.

In one or more embodiments, to detect the occurrence of the thermal runaway event in the battery pack 107, the control unit 203 is configured to determine whether the detected concentration of the gases exceeds a predefined threshold concentration level. Further, if it is determined that the detected concentration of the gases exceeds the predefined threshold concentration level, then the control unit 203 detects the occurrence of the thermal runaway event in the battery pack 107.

In one or more embodiments, to detect the occurrence of the thermal runaway event in the battery pack 107, the control unit 203 is configured to determine whether the particulates generated in the battery pack 107 exceeds a predefined threshold concentration level. Further, if it is determined that the particulates generated in the battery pack 107 exceeds the predefined threshold concentration level, then the control unit 203 detects the occurrence of the thermal runaway event in the battery pack 107.

In an embodiment, upon the detection of the occurrence of the thermal runaway event in the battery pack 107, the control unit can be further configured to control the annunciator 213 to generate an alarm to alert a driver of the tractor trailer system 100. In a non-limiting example embodiment, the annunciator 213 is configurable to be installed in one of the driver cabin 109 or outside the battery pack housing 201. In another non-limiting example embodiment, the annunciator 213 may also be placed or installed anywhere in or around the tractor 101 or the trailer 103.

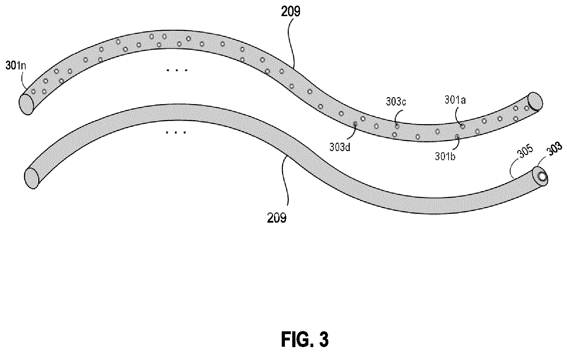

FIG. 3 illustrates an example schematic diagram of the corresponding tubes 209 of FIG. 2. As shown in FIG. 3, the corresponding tube of the plurality of tubes (T-209a, T-209b, T-209c, T-209d, T-209e, ..., and T-209n) has a plurality of aspirating points (301a, 301b, 301c, 301d, ..., 301n). In a first example embodiment, the corresponding tube among the plurality of tubes (T-209a, T-209b, T-209c, T-209d, T-209e, ..., and T-209n) may have an aspirating point 303 at an end point 305 of the corresponding tube. In another example embodiment, the corresponding tube among the plurality of tubes (T-209a, T-209b, T-209c, T-209d, T-209e, ..., and T-209n) may have the plurality of aspirating points (303a, 303b, 303c, 303d, ..., 303n) along a length of the corresponding tube and/or on a sealed end of the corresponding tube. In an example embodiment, the battery pack housing 201 may also have one or more aspirating points for reference measurement.

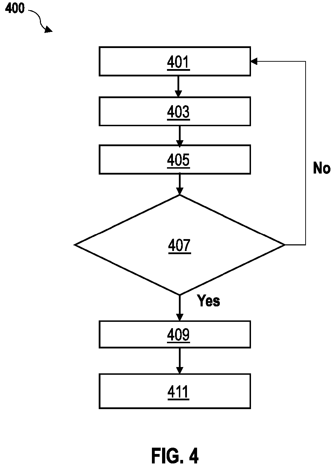

FIG. 4 illustrates a flowchart of a method 400 performed by the sensing system for detecting the thermal runaway event in the battery pack 107. The method 400 is executed by the components of the sensing system 200.

At step 401 of the method 400, the control unit 203 controls the fan 207 to pull gases and/or particulates generated in the battery pack 107 through the plurality of tubes (T-209a, T-209b, T-209c, T-209d, T-209e, ..., T-209n).

At step 403, the control unit 203 controls the fan 207 to throw the pulled gases and/or particulates onto the gas sensor among the sensors 211.

At step 405, the gas sensor among the sensors 211 detects the change in the one or more physical stimuli associated with the battery pack 107 based on the pulled gases and/or particulates thrown by the fan 207.

At step 407, the control unit 203 determines whether the detected change in the one or more physical stimuli exceeds the predefined threshold concentration level. If, at step 407, it is determined that the detected change in the one or more physical stimuli exceeds the predefined threshold concentration level, then at step 409, the control unit 203 detects the occurrence of the thermal runaway event in the battery pack 107.

Further, if at step 407, it is determined that the detected change in the one or more physical stimuli does not exceed the predefined threshold concentration level, then the flow of the method 400 again returns to (step 401), and the method steps 401 through 407 are repeated until the control unit 203 determines that the detected concentration of the gases exceeds the predefined threshold concentration level.

Furthermore, once the occurrence of the thermal runaway event is detected in the battery pack 107, the flow of the method 400 proceeds to step 411. At step 411, the control unit 203 controls the annunciator 213 to generate the alarm to alert the driver of the tractor trailer system 100 regarding the occurrence of the thermal runaway event in the battery pack 107.

In view of the one or more embodiments as described above, the sensing system 200 provides various technical effects and benefits including helping in identifying and detecting fire/thermal runaway events in the battery pack 107. Also, the sensing system 200 is a single sensor system that can be placed inside the enclosure of the battery pack 107. Also, with the use of the fan 207, the miniaturized aspirating system with small tubes, and the control unit 203, the sensing system 200 can efficiently detect the thermal runaway/fire event located in any part of the battery pack 107. Also, using the annunciator 213, the sensing system 200 can protect the driver from the incidents that may be caused due to the thermal runaway/fire events in the battery pack 107.

As would be apparent to a person in the art, various working modifications may be made to the method in order to implement the inventive concept as taught herein.

Moreover, the actions of any flow diagram need not be implemented in the order shown; nor do all of the acts necessarily need to be performed. Also, those acts that are not dependent on other acts may be performed in parallel with the other acts.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

## Claims

1. A sensing system (200), comprising:
at least one sensor (211) positioned inside an enclosure (201) of a battery pack (107);
a fan (207) positioned in a vicinity of the at least one sensor;
a plurality of tubes (209), wherein each tube of the plurality of tubes has a plurality of aspirating points (301, 303), and is connected between the fan and the battery pack; and
a control unit (203) connected to the fan and the at least one sensor, wherein the control unit is configured to:
control the fan to pull, through the plurality of tubes, gases and/or particulates generated in the battery pack;
control the fan to throw the pulled gases and/or particulates onto the at least one sensor, wherein the at least one sensor is configured to detect a change in one or more physical stimuli associated with the battery pack based on the pulled gases and/or particulates; and
detect an occurrence of a thermal runaway event in the battery pack based on the detected change in the one or more physical stimuli.

2. The sensing system (200) of claim 1, wherein, to detect the occurrence of the thermal runaway event in the battery pack (107), the control unit (203) is configured to:
determine whether the detected concentration of the gases exceeds a predefined threshold concentration level; and
detect the occurrence of the thermal runaway event based on a determination that the detected concentration of the gases exceeds the predefined threshold concentration level.

3. The sensing system (200) of claim 1 or claim 2,
wherein the one or more physical stimuli corresponds to one or more of a gas concentration, a particulate concentration, a temperature, a pressure, and a humidity of the pulled gases and/or the particulates, and
wherein, to detect the occurrence of the thermal runaway event in the battery pack (107), the control unit (203) is configured to:
determine whether the particulates generated in the battery pack exceeds a predefined threshold concentration level; and
detect the occurrence of the thermal runaway event based on a determination that the particulates generated in the battery pack exceeds the predefined threshold concentration level.

4. The sensing system (200) of any preceding claim, wherein each tube of the plurality of tubes (209) is one of a flexible tube or a rigid tube.

5. The sensing system (200) of any preceding claim, wherein
the battery pack (107) includes a plurality of unit battery cells (217), and
a corresponding tube (209) among the plurality of tubes is connected between the fan (207) and a corresponding unit battery cell (217) among the plurality of unit battery cells.

6. The sensing system (200) of any preceding claim, wherein the corresponding tube (209) of the plurality of tubes has the plurality of aspirating points (301, 303) at each of a first end and a second end of the corresponding tube or along a length of the corresponding tube.

7. The sensing system (200) of any preceding claim, comprising an annunciator (213), wherein the control unit (203) is configured to control the annunciator to generate an alarm upon the detection of the occurrence of the thermal runaway event in the battery pack (107).

8. A method (400) for detecting a thermal runaway event in a battery pack (107), the method comprising:
in a sensing system (200) that includes at least one sensor (211) positioned inside an enclosure (201) of the battery pack (107), a fan (207) positioned in a vicinity of the at least one sensor, a plurality of tubes (209) each having a plurality of aspirating points (301, 303) and is connected between the fan and the battery pack, and a control unit (203) connected to the fan and the at least one sensor:
controlling (401), by the control unit, the fan to pull, through the plurality of tubes, gases and/or particulates generated in the battery pack;
controlling (403), by the control unit, the fan to throw the pulled gases and/or particulates onto the at least one sensor;
detecting (405), by the at least one sensor, a change in one or more physical stimuli associated with the battery pack based on the pulled gases and/or particulates; and
detecting (407, 409), by the control unit, an occurrence of a thermal runaway event in the battery pack based on the detected change in the one or more physical stimuli.

9. The method (400) of claim 8, wherein, for detecting the occurrence of the thermal runaway event in the battery pack (107), the method comprises:
determining (407), by the control unit (203), whether the detected concentration of the gases exceeds a predefined threshold concentration level; and
detecting (409), by the control unit, the occurrence of the thermal runaway event based on a determination that the detected concentration of the gases exceeds the predefined threshold concentration level.

10. The method of claim 8 or claim 9,
wherein the one or more physical stimuli corresponds to one or more of a gas concentration, a particulate concentration, a temperature, a pressure, and a humidity of the pulled gases and/or the particulates, and
wherein, for detecting the occurrence of the thermal runaway event in the battery pack (107), the method comprises:
determining (407), by the control unit (203), whether the particulates generated in the battery pack exceeds a predefined threshold concentration level; and
detecting (409), by the control unit, the occurrence of the thermal runaway event based on a determination that the particulates generated in the battery pack exceeds the predefined threshold concentration level.

11. The method of claim 8, 9 or 10, wherein
the sensing system (200) includes an annunciator (213), and
the method comprises controlling (411), by the control unit (203), the annunciator to generate an alarm upon the detection of the occurrence of the thermal runaway event in the battery pack (107).
